# EUROPEAN PATENT APPLICATION

(11) **EP 4 733 283 A1**
(43) Date of publication of application: **29.04.2026**
(21) Application number: 24208382.2
(22) Date of filing: 23.10.2024
(51) Int. Cl.: C04B 20/00, C04B 28/02, C04B 40/06, C04B 111/74

(54) **COMPOSITION FOR HIGH COMPRESSIVE STRENGTH GROUT**

(71) Applicant: Euroquartz SA, 4681 Hermalle-sous-Argenteau (BE)
(72) Inventor: DE PEUTER, Frans, 2400 Mol (BE); BOVY, Adrien, 4430 Ans (BE); KAZEMI, Mostafa, 4600 Visé (BE)
(74) Representative: AWA Benelux

(57) **Abstract**

The present invention is related a dry cementitious composition for a C120 grout, comprising for a total percentage of 100%:
- hydraulic binders in a range between 29.95 and 59.95 wt%,
- additives in a range between 0.05 and 5 wt%,
- silicon dioxide in a range between 40 and 70 wt%,
said silicon dioxide having a particle size determined according to the standard EN 933-1 :2012 comprised between 0.1 and 2.5 mm with particles in a first range 0.1 to 0.50 mm, in a second range 0.50 to 1 mm, in a third range 1 to 1.5 mm and in a fourth range 1.5 to 2.5 mm, with at least 50% in weight of the particles in the first and second ranges with respect to the total weight of the silicon dioxide.

## Description

### FIELD OF THE INVENTION

The present invention is related to a dry cementitious composition suitable for ultra-high-performance grout with a compressive strength superior or equal to 120 MPa, also called C120. It is also related to its bulk packaging.

### BACKGROUND OF THE INVENTION

For offshore applications, there are formulations for three certified compressive strengths of 60, 90 and 120 MPa of the grout, respectively called C60, C90 and C120. The blend dry mix made up of sand, cement and additives is transported by ship to the offshore platform where it is mixed with water and injected in the foundations of the mast of the wind turbine structure.

For the C60 and C90 grouts, the blend dry mix is stored in bulk in silos of more than 20 tons and pneumatically transported to the mixer. For the C120 grout, the blend dry mix comprises sand particles with a large particle size distribution in a range from 10 µm to 4 mm. It gives rise to segregation and sedimentation problems during storage in silos, preventing the pneumatic transport of the material.

To solve this problem, the formulation for the C120 is stored in flexible bulk containers (FBC's) of small quantity. This storage in small bags is less efficient, generates more dust, requires more handling and is therefore less safe and more costly.

### SUMMARY OF THE INVENTION

The present invention aims to provide a new formulation for the blend dry mix, also called dry cementitious composition, adapted for the C120 grout and for a bulk handling.

To avoid the problem of segregation, the particle size of the sand, also called silica particles, is kept below 2.5 mm with a continuous size distribution in the range from 0.1 to 2.5 mm. The narrow and continuous distribution allows to create a mix with an homogeneous distribution of the particles without interstices, preventing the segregation and sedimentation problems during transfer and storage. In addition, the limitation in size to 2.5 mm has the other advantage to reduce the wear on the mixing equipment.

According to the invention, there is at least 50% in weight, preferably at least 60%, of the silica particles in the range 0.1 to 1 mm with respect to the total weight of silica particles. This distribution with a lot of fine particles prevents segregation problems and bleeding issues during mixing with water.

More specifically, the invention relates to a dry cementitious composition for a C120 grout, comprising for a total percentage of 100%:
- hydraulic binders in a range between 29.95 and 59.95 wt%,
- additives in a range between 0.05 and 5 wt%,
- silicon dioxide in a range between 40 and 70 wt%,
said silicon dioxide having a particle size determined according to the standard EN 933-1:2012 comprised between 0.1 and 2.5 mm with particles in a first range 0.1 to 0.50 mm, in a second range 0.50 to 1 mm, in a third range 1 to 1.5 mm and in a fourth range 1.5 to 2.5 mm, with at least 50% in weight of the particles in the first and second ranges with respect to the total weight of the silicon dioxide.

This formulation can be transported in bulk pressurized tanks, silo trucks or intermodal pressurized tanks which are the preferred means of transport for the offshore industry.

According to preferred embodiments of the invention, the dry cementitious composition has one or more of the following features:
- at least 60% in weight of the particles are in the first and second ranges with respect to the total weight of the silicon dioxide;
- the particles have the following distribution in weight with respect to the total weight of the dry cementitious composition:
   - In the first range : between 20 and 24 wt%,
   - In the second range : between 9 and 21 wt%,
   - In the third range : between 10 and 17 wt%,
   - In the fourth range : between 1 and 8 wt%;
- the hydraulic binders are in a range from 34.8 to 49.8 wt%, the silicon dioxide is in a range from 50 to 65 wt% and the additives are in a range from 0.2 to 3.5 wt%;
- the hydraulic binders are in a range from 39.7 to 44.7 wt%, the silicon dioxide is in a range from 55 to 60 wt% and the additives are in a range from 0.3 to 3 wt%;
- the silicon dioxide has a particle size comprised between 0,1 and 2 mm;
- it comprises silicon dioxide from four different sands;
- the hydraulic binders comprise a hydraulic cement and further comprise a silica fume and/or a grinded granulated blast furnace slag;
- the hydraulic binders comprise the hydraulic cement, the silica fume and the grinded granulated blast furnace slag with a total percentage of silica fume and grinded granulated blast furnace slag comprised between 5 and 35%, preferably between 15 and 25% with respect to the total percentage of hydraulic binders;
- the total percentage of silica fume and grinded granulated blast furnace slag with respect to the total percentage of the dry cementitious composition is comprised between 2 and 14 wt%, preferably between 4 and 9 wt%;
- the additives comprise a defoamer, an expansive agent and a plasticizer;
- the additives comprise a colloidal agent.

The invention further relates to a bulk packaging for pneumatic transfer with a quantity superior to 20 tons of said dry cementitious composition and to a C120 grout comprising said dry cementitious composition and water.

### BRIEF DESCRIPTION OF THE FIGURE

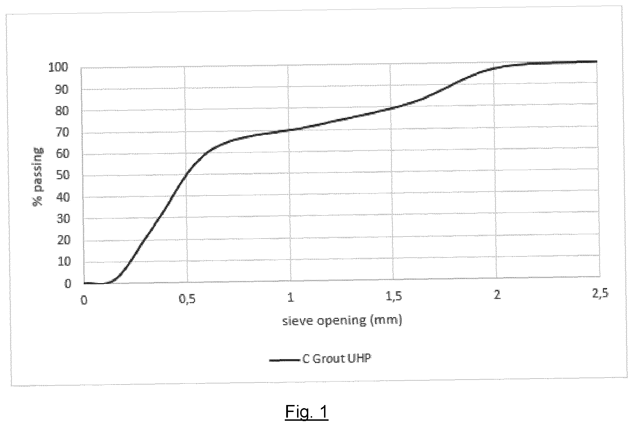

Figure 1 represents the particle size distribution of the silica particles.

### DESCRIPTION OF THE INVENTION

The present invention is related to a dry cementitious composition for a C120 grout suitable for a bulk storage in silos of several tons and a pneumatic transport to the grout mixing equipment that may be for example a large capacity concrete mixer. This formulation is especially suitable (but not limited to) for offshore applications.

The composition comprises particles of silicon dioxide, also called silica, hydraulic binders and additives. Preferably, the composition is constituted of particles of silicon dioxide, hydraulic binders and additives.

The composition comprises for a total of 100% in weight:
- between 40 and 70% of silicon dioxide, preferably between 50 and 65%, more preferably between 55 and 60%,
- between 29.95 and 59.95% of hydraulic binders, preferably between 34.8 and 49.8%, more preferably between 39.7 and 44.7%,
- between 0.05 and 5% of additives, preferably between 0.2 and 3.5%, more preferably between 0.3 and 3%.

According to the invention, the particle size of the silicon dioxide is inferior or equal to 2.5 mm. The particle size is determined by sieve analysis according to the standard EN 933-1:2012 on the silica mix. The standard EN 12192-1:2002 may also be used to determine the particle size in the full mix including all the compounds of the dry cementitious composition.

The particle size distribution ranges from 0.1 to 2.5 mm, preferably from 0.1 to 2 mm. In this range, there is a continuous distribution of particles as shown in the curve of the figure 1. It means that there are at least particles in the range 0.1 to 0.5, 0.5 to 1, 1 to 1.5 and 1.5 to 2.5 mm. According to the invention, there is at least 50% in weight, preferably at least 60% in weight, of the particles in the range 0.1 to 1 mm with respect to the total weight of the silica particles. The percentage in weight of the silica particles between 0.1 and 2.5 mm is given in Table 1 with respect to 100% of the dry cementitious composition.

**Table 1**

| **range** | **Minimum (% by weight)** | **maximum (% by weight)** |
|---|---|---|
| 0.1-0.50 | 20 | 24 |
| 0.50-1.00 | 9 | 21 |
| 1.00-1.50 | 10 | 17 |
| 1.50-2.50 | 1 | 8 |

This particle size distribution can be obtained by adding 1, 2, 3, 4 or more different sands to the composition.

The hydraulic binder used in the present invention includes, but not limited to Portland cement, and other known binders to the skilled artisan in the art. In addition, the hydraulic binders preferably comprise a silica fume and/or a grinded granulated blast furnace slag. More preferably, the hydraulic binders comprise the silica fume and the grinded granulated blast furnace slag, the addition of both allowing in synergy to reduce the heat of hydration. The silica fume may have a blaine value between 15 m²/g and 30 m²/g and the grinded granulated blast furnace slag may have a blaine value between 25 m²/kg and 35 m²/kg. The total percentage in weight of silica fume and grinded granulated blast furnace slag with respect to the total percentage of hydraulic binders is preferably comprised between 5 and 35%, more preferably between 15 and 25%. The total percentage in weight of silica fume and grinded granulated blast furnace slag with respect to the total dry cementitious composition is preferably comprised between 2 and 14%, more preferably between 4 and 9%.

The dry cementitious composition comprises additives. It may be a rheology modifier, a plasticizer, an expanding agent, a defoamer, a retarder, a colloidal agent, a hardening catalyst, a waterproofing agent, a shrinkage reducing agent and an internal curing agent.

Any known rheology modifiers in the art can optionally be added into the composition. Said rheology modifier includes but not limited to, bentonite, etc. The range of said rheology modifier added in the composition of the present invention is from 0 to 2% by weight of the total dry cementitious composition.

In principal, any plasticizers can be used in the composition of the present invention. Said plasticizers include, but not limited to lignosulfonates, naphthalene sulfonate, sulphonated naphthalene formaldehyde, polycarboxylates. The amount of plasticizers added in the composition of the present invention is preferably in the range of 0.05 to 1.5%, more preferably in the range 0.1 to 1%, by weight of the total dry cementitious composition.

The expanding agents suitable for the composition of the present invention include aluminum powder, calcium carbide, quick lime magnesium oxide. Preferably aluminum powder and calcium sulpho aluminate are suitable. The amount of the expanding agents added in the composition of the present invention can be adjusted according to different conditions and purposes of the present invention. Preferably, it is comprised between 0.003 and 1 wt%, more preferably between 0.008 and 0.02 wt%.

The composition of the present invention may optionally compromise additional additives, for instance retarders, in the range of 0 to 1%, preferably from 0.01 to 1% by weight of the total dry cementitious composition. Retarders are to delay gelling and setting, said retarders suitable for the present invention includes but not limited to: boric acid, tartaric acid, salicylic acid, citric acid, glucose. Other traditional admixtures known in the art also can be added in the composition of the present invention, these admixtures are, but not limited to: A water retaining agent selected from the following substances: calcium abietate, polyvinyl acetate, sodium alginate, fly ash.

The composition of the present invention may optionally further comprise for a total percentage in weight between 0 and 1%:
- a colloidal agent selected from following active substances: calcium abietate, sodium carbonate, starch, carboxymethylcellulose, casein, polyethyleneoxide;
- a stabilizing agent selected from the following substances: sodium bicarbonate, fly ash, sodium silicate, cellulose ether;
- a hardening catalyst selected from following active substances: lithium carbonate, sodium aluminate, sodium sulfate, tris hydroxy methyl amino methane;
- an anti-foaming agent, also called defoamer, selected from following active substances: fat alcohols, polyoxyethylene alkylphenol, nonylphenol, tributylphosphate, silicones, polysiloxane on inert filler and butyl stearate. In the usual matter, such an additive or agent eliminates any foaming resulting from air entrainment during mixing, transport and handling of the grouts;
- a waterproofing agent selected from following active substances: oleic acid, fat limes, calcium stearates, silicones;
- a shrinkage reducing agent selected from following active substances: neopentyl glycol or polyether;
- an internal curing agent selected from following active substances: 2(2-(2-butoxyethoxy)ethoxy)ethanol.

In the composition, preferably at least the following additives are added: a defoamer, an expansive agent and a plasticizer. In addition, the composition preferably also comprises a colloidal agent. The defoamer is comprised in a range from 0.02 to 0.7%, preferably from 0.05 to 0.5 wt% with respect to the total weight of the dry cementitious composition. The expansive agent is in a range from 0.003 to 1%, preferably from 0.008 to 0.02 wt% with respect to the total weight of the dry cementitious composition. The colloidal agent is comprised in a range from 0 to 0.07, preferably from 0.001 to 0.05 wt% with respect to the total weight of the dry cementitious composition. The plasticizer is comprised in a range from 0.05 to 1.5 wt%, preferably from 0.1 to 1 wt% with respect to the total weight of the dry cementitious composition. For example, the defoamer can be a polysiloxane on inert filler, the expansive agent can be an aluminum powder, the colloidal agent can be a polyethyleneoxide, and the plasticizer can be a polycarboxylate with the percentages aforementioned.

Some examples of compositions are given in Table 2. In the examples, four different sands are added to obtain a silica particle size ranging from 0.1 to 2 mm with a total percentage in a range of 55 to 65 wt% with respect to the total dry cementitious composition and with a percentage of silica particles in the range between 0.1 and 1 mm comprised between 71 and 90% with respect to the total weight of the silica particles. The hydraulic binders are present in a range of 32 to 43 wt% and the additives in a range of 0.5 to 2.6 wt%.

**Table 2**

| **Raw Material** | **Range (wt%)** | **Example 1** | **Example 2** | **Example 3** | **Example 4** |
|---|---|---|---|---|---|
| **Quartz (SiO₂)** | 40-70 | 57.80 | 61.00 | 65.43 | 54.81 |
| **Hydraulic binders** | 29.95-59.95 | 41.60 | 38.50 | 32.00 | 42.99 |
| **Additives** | 0.05-1.50 | 0.60 | 0.50 | 2.57 | 2.20 |

According to the invention, the dry cementitious composition is mixed with water in a ratio water/dry cementitious composition comprised between 0.09 and 0.13 to obtain the properties required for the C120 grout. Preferably, the ratio is comprised between 0.1 and 0.12.

The mechanical properties of the example 1 of Table 2 mixed with a ratio water/dry cementitious composition of 0.1 are given in Table 3 with the corresponding standards for the measurements. A compressive strength superior to 120 MPa is obtained.

**Table 3**

| **Basic data C Grout UHP** | | | |
|---|---|---|---|
| **Compressive Strength EN196-1:2016** | average | 28 days | 144,27 MPa |
| | characteristic | 28 days | 140,66 MPa |
| **Flexural Strength EN196-1: 2016** | | 28 days | 18,65 MPa |
| **Elasticity Modulus EN 13412:2002** | | 28 days | 52.91 MPa |

## Claims

1. A dry cementitious composition for a C120 grout, comprising for a total percentage of 100%:
- hydraulic binders in a range between 29.95 and 59.95 wt%,
- additives in a range between 0.05 and 5 wt%,
- silicon dioxide in a range between 40 and 70 wt%,
said silicon dioxide having a particle size determined according to the standard EN 933-1 :2012 comprised between 0.1 and 2.5 mm with particles in a first range 0.1 to 0.50 mm, in a second range 0.50 to 1 mm, in a third range 1 to 1.5 mm and in a fourth range 1.5 to 2.5 mm, with at least 50% in weight of the particles in the first and second ranges with respect to the total weight of the silicon dioxide.

2. The dry cementitious composition according to claim 1, wherein at least 60% in weight of the particles are in the first and second ranges with respect to the total weight of the silicon dioxide.

3. The dry cementitious composition according to claim 1 or 2, wherein the particles have the following distribution in weight with respect to the total weight of the dry cementitious composition:
- In the first range : between 20 and 24 wt%,
- In the second range : between 9 and 21 wt%,
- In the third range : between 10 and 17 wt%,
- In the fourth range : between 1 and 8 wt%.

4. The dry cementitious composition according to any of previous claims, wherein the hydraulic binders are in a range from 34.8 to 49.8 wt%, the silicon dioxide is in a range from 50 to 65 wt% and the additives are in a range from 0.2 to 3.5 wt%.

5. The dry cementitious composition according to any of the previous claims, wherein the hydraulic binders are in a range from 39.7 to 44.7 wt%, the silicon dioxide is in a range from 55 to 60 wt% and the additives are in a range from 0.3 to 3 wt%.

6. The dry cementitious composition according to any of the previous claims, wherein the silicon dioxide has a particle size comprised between 0,1 and 2 mm.

7. The dry cementitious composition according to any of the previous claims, wherein it comprises silicon dioxide from four different sands.

8. The dry cementitious composition according to any of the previous claims, wherein the hydraulic binders comprise a hydraulic cement and further comprise a silica fume and/or a grinded granulated blast furnace slag.

9. The dry cementitious composition according to the previous claim, wherein the hydraulic binders comprise the hydraulic cement, the silica fume and the grinded granulated blast furnace slag with a total percentage of silica fume and grinded granulated blast furnace slag comprised between 5 and 35%, preferably between 15 and 25% with respect to the total percentage of hydraulic binders.

10. The dry cementitious composition according to claim 8 or 9, wherein the total percentage of silica fume and grinded granulated blast furnace slag with respect to the total percentage of the dry cementitious composition is comprised between 2 and 14 wt%, preferably between 4 and 9 wt%.

11. The dry cementitious composition according to any of previous claims, wherein the additives comprise a defoamer, an expansive agent and a plasticizer.

12. The dry cementitious composition according to the previous claim, wherein the additives comprise a colloidal agent.

13. A bulk packaging for pneumatic transfer with a quantity superior to 20 tons of said dry cementitious composition according to any of previous claims.

14. A C120 grout comprising the dry cementitious composition according to any of the claims 1 to 12 and water.
